# EUROPÄISCHE PATENTSCHRIFT

(11) **EP 3 470 689 B1**
(45) Veröffentlichungstag und Bekanntmachung des Hinweises auf die Patenterteilung: **08.01.2020**
(21) Anmeldenummer: 18195051.0
(22) Anmeldetag: 18.09.2018
(51) Int. Cl.: F16B 5/06, F16B 2/24, H02G 3/14, H05K 7/00

(54) **BEFESTIGUNGSVORRICHTUNG UND VERFAHREN ZUM MONTIEREN EINES SENSORS IN EINER ÖFFNUNG**
FIXING DEVICE AND METHOD FOR MOUNTING A SENSOR IN AN OPENING
DISPOSITIF DE FIXATION ET PROCÉDÉ DE MONTAGE D'UN CAPTEUR DANS UNE OUVERTURE

(30) Priorität: 10.10.2017 DE 102017123485
(43) Veröffentlichungstag der Anmeldung: 17.04.2019
(73) Patentinhaber: Sick AG, 79183 Waldkirch (DE)
(72) Erfinder: Scholder, Jochen, 79183 Waldkirch (DE); Schätzle, Sebastian, 79261 Gutach (DE)

(56) Entgegenhaltungen:
- DE-U1-202009 013 561
- DE-U1-202015 107 015
- KR-Y1- 200 414 391

## Beschreibung

Die Erfindung betrifft eine Befestigungsvorrichtung und ein Verfahren zum Montieren eines Sensors in einer Öffnung einer Wandung nach dem Oberbegriff von Anspruch 1 beziehungsweise 9.

Da die meisten Sensoren in einer stationären Position benutzt werden, gibt es zahlreiche Befestigungslösungen. Eine häufige Montageposition ist das Anbringen in einer Öffnung einer Wandung, beispielsweise einem Blech, einer Schalttafel von Betriebsmitteln, Maschinen oder Schaltschränken, oder allgemein einer Abgrenzung etwa seitlich neben einem Förderband. Die meist rechteckigen beziehungsweise quaderförmigen Sensoren besitzen in der Regel aufwändig konstruierte Gehäuse mit Befestigungselementen, die dennoch oftmals eine mühsame Montage mit zahlreichen Schrauben nicht vermeiden. Außerdem weist das Gehäuse einen umlaufenden Bund für den Anschlag an der Wandung auf. Das alles bedeutet aber nicht nur konstruktiven Aufwand und umständliche Montageschritte, die Befestigungsmittel und der Bund stehen außerdem auch einem ansprechenden Design des Sensors im Weg.

Eine herkömmliche Einbaulösung sieht Rasthaken vor, die am Kunststoffgehäuse auf unterschiedlichen Ebenen angebracht sind. Bei dem Einschieben in die Öffnung rasten die Haken so lange durch, bis das Gehäuse mit dem Bund an der Wandung anliegt. Dabei kann es passieren, dass durch Toleranzen Spiel zwischen den Rasthaken und der Wandung verbleibt und das Gehäuse nicht fest sitzt. Dies wird selbst über eine zusätzliche Dichtung oder dergleichen nur zum Teil kompensiert.

Bekannt ist weiterhin, eine zusätzliche rahmenartige Befestigungshilfe zu verwenden. Das Gehäuse wird in die Öffnung eingeschoben und mit der Befestigungshilfe auf der Gegenseite der Wandung verschraubt. Anschließend wird die Befestigungshilfe von hinten auf Anschlag an der Wandung festgeschraubt. Trotz der umständlichen Montage besteht die Möglichkeit, dass sich bei starker Vibration die Schraubverbindungen lösen.

Eine weitere alternative Befestigung nutzt ein zusätzliches Spannelement. Auch hier wird zunächst das Gehäuse in die Öffnung geschoben. Das Spannelement wird unter Vollspannung an dem Gehäuse angebracht und hält es durch die Spannung gegen den Anschlag in der Öffnung fest. Die Anbringung erfolgt meist durch Verschrauben, was unter Vollspannung einiges Geschick verlangt. Ein alternativer Formschluss für die Verbindung von Gehäuse und Spannelement fordert eine entsprechend aufwändige Konstruktion.

Die DE 20 2009 013 561 U1 offenbart ein Leuchtensystem für den Deckeneinbau. Dabei wird ein Einbaurahmen in einer abgehängten Decke montiert. Die Ecken des Einbaurahmens weisen Haltelaschen auf, und damit werden Stützlaschen mit zwei leicht federnden Armen verbunden, die nach der Montage des Einbaurahmens auf der Oberseite der abgehängten Decke aufliegen. In mehreren Öffnungen des Einbaurahmens werden dann Leuchtenmodule aufgenommen.

Es ist daher Aufgabe der Erfindung, eine verbesserte Befestigungsmöglichkeit zu schaffen.

Diese Aufgabe wird durch eine Befestigungsvorrichtung und ein Verfahren zum Montieren eines Sensors in einer Öffnung einer Wandung nach Anspruch 1 beziehungsweise 9 gelöst. Die Befestigungsvorrichtung weist einen Einbaurahmen auf, der zunächst in der Öffnung angebracht wird. Anschließend wird der Sensor an dem Einbaurahmen, je nach dessen Gestaltung insbesondere auch in dem Einbaurahmen gehalten.

Die Erfindung geht von dem Grundgedanken aus, zur Befestigung des Einbaurahmens eine flexible Halteklammer mit Federkraft zu verwenden. Die Halteklammer wird an dem Einbaurahmen angebracht, dann angedrückt und wieder im Einbaurahmen selbst fixiert, um den Einbaurahmen mit ihrer Federkraft an die Wandung zu spannen.

Die Erfindung hat den Vorteil, dass durch den Einbaurahmen und die Halteklammer die Funktionen getrennt sind. Zunächst wird nur der Einbaurahmen in der Öffnung angebracht. Die Halteklammer ermöglicht dies in wenigen sehr einfachen Handgriffen, da nur eine einzige Halteklammer montiert werden muss. Dabei sind durch das Hebelprinzip die Montagekräfte für die Vorspannung reduziert. Durch die Vorspannung der Halteklammer werden außerdem Toleranzen ausgeglichen. Erst im zweiten Schritt wird der Sensor in den Einbaurahmen montiert. Weder die Wandung noch vor allem der Sensor selbst sind in irgendeiner Weise speziell an diese Montage angepasst. Insbesondere muss das Gehäuse keinerlei Befestigungselemente und keinen Bund als Anschlag besitzen, ein ansprechendes Design des Sensors bleibt unberührt. Die Befestigungslösung ist universell: Sie ist auch für Gehäuse geeignet, die ursprünglich gar nicht für eine Montage in einer Öffnung vorgesehen waren, und der Sensor kann mit dem gleichen Gehäuse in anderen Umgebungen installiert werden.

Der Einbaurahmen ist bevorzugt rechteckig. Das gilt nochmals bevorzugt für seine äußere und innere Kontur, d.h. der Einbaurahmen ist einerseits außen für eine rechteckige Öffnung und andererseits innen für einen quaderförmigen Sensors geformt. Ein Quader ist dabei aber nicht streng geometrisch zu verstehen, insbesondere sind Rundungen und ähnliche durch Design oder Funktion bedingte Abweichungen möglich, wie Anschlüsse oder schräg gestellte Anzeigen und Bedienelemente. Der Einbaurahmen kann prinzipiell auch eine andere Form haben, etwa für eine runde Öffnung oder einen zylindrischen Sensor, und sogar zwischen den Formen vermitteln, etwa für den Einbau eines zylindrischen Sensors in eine rechteckige Öffnung.

Der Einbaurahmen weist bevorzugt einen Überstand auf, der beim Einstecken in die Öffnung einen Anschlag an der Wandung bildet. Dieser Überstand ersetzt gleichsam den Anschlag, der herkömmlich am Sensor selbst angebracht sein muss. Der Einbaurahmen gelangt dadurch bis in die gewünschte Tiefe in die Öffnung. Der Überstand ist vorzugsweise rundum vorgesehen, damit der Einbaurahmen fest und bündig in der Öffnung sitzt.

Der Einbaurahmen weist bevorzugt Seitenwände auf, die im Einbauzustand durch die Öffnung hindurchragen und an denen die Halteklammer den Einbaurahmen hält. Die Seitenwände sind bevorzugt zu beiden Seiten vorgesehen, um den Sensor zuverlässig zu halten, in seiner Größe aber nicht nach oben und unten zu beschränken beziehungsweise dort noch Anschlüsse zu ermöglichen. Es sind eine abweichende Anzahl und Position von Seitenwänden denkbar. Im Übrigen wird in dieser Beschreibung davon ausgegangen, dass der Sensor aufrecht montiert wird. Das ist nicht einschränkend zu verstehen, relative Angaben wie oben, unten oder zu beiden Seiten sind ohne weiteres auf andere Orientierungen oder gespiegelte Konfigurationen übertragbar.

Der Einbaurahmen weist erfindungsgemäß Führungsschlitze für die Halteklammer auf. Dadurch kann die Halteklammer sehr einfach an dem Einbaurahmen angebracht und gegen die Führungsschlitze gespannt werden. Die Führungsschlitze sind bevorzugt in Seitenwänden des Einbaurahmens vorgesehen. Die Führungsschlitze sind vorzugsweise voneinander deutlich beabstandet, insbesondere um die Halteklammer an diametral gegenüberliegenden Punkten zu stützen, etwa an den Ecken oder in deren Nähe.

Der Einbaurahmen weist erfindungsgemäß mindestens einen oberen Führungsschlitz zum Einsetzen der entspannten Halteklammer auf. So wird die Halteklammer anfänglich in den Einbaurahmen eingeführt. Die oberen Führungsschlitze sind vorzugsweise tiefer, als dies für die spätere montierte Halteposition erforderlich ist. Die Halteklammer wird dann anfänglich tiefer in die Führungsschlitze eingeschoben, damit sie unten über den Einbaurahmen hinausragt und angedrückt werden kann. Oberer Führungsschlitz bedeutet, dass ein solcher Führungsschlitz am oberen Rand der Öffnung oder in dessen Nähe angeordnet ist.

Der Einbaurahmen weist erfindungsgemäß mindestens einen unteren Führungsschlitz zum Halten der gespannten Halteklammer auf. In den unteren Führungsschlitzen wird die Halteklammer unter Aufrechterhalten der Spannung nach oben geschoben. Sie rutscht dabei zugleich in den oberen Führungsschlitzen wieder etwas zurück nach oben, ohne aber die oberen Führungsschlitze zu verlassen. Danach befindet sich die gespannte Halteklammer in den oberen und unteren Führungsschlitzen gespannt. Die Federkraft sorgt dafür, dass die Halteklammer nicht mehr in den Führungsschlitzen beweglich ist, und sie drückt den Einbaurahmen fest gegen die Wandung. Unterer Führungsschlitz bedeutet als Gegenbegriff zu oberem Führungsschlitz, dass sich der untere Führungsschlitz am unteren Rand der Öffnung oder in dessen Nähe befindet.

Die Halteklammer ist bevorzugt bügelförmig mit seitlichen Armen und einer unteren Querverbindung ausgebildet. Die Halteklammer ist demnach oben offen, die seitlichen Arme weisen dort keine Querverbindung auf, so dass die Halteklammer auch tiefer und ungehindert von dem Einbaurahmen in obere Führungsschlitze eingeführt werden kann. Die untere Querverbindung oder der eigentliche Bügelbereich bietet eine geeignete Angriffsfläche, um mit Hebelwirkung durch Andrücken die erforderliche Spannkraft auf die Halteklammer aufzubringen.

Die seitlichen Arme weisen bevorzugt eine Ausbuchtung auf. Diese erzeugt beziehungsweise unterstützt die Federkraftwirkung. Die Ausbuchtung ist außerdem vorzugsweise so dimensioniert, dass die seitlichen Arme im entspannten Zustand der Halteklammer bei Anliegen an der Wandung gerade für den richtigen Abstand zwischen Wandung und Halteklammer sorgen, um sie in die oberen Führungsschlitze einzusetzen.

Das zweite Befestigungselement ist bevorzugt als mindestens eine Montageschiene ausgebildet. Der Sensor wird in den Einbaurahmen eingesetzt und dort mit Hilfe der Montageschiene fixiert. Dazu wird die Montageschiene über den Sensor gelegt und an dem Einbaurahmen und/oder der Halteklammer befestigt.

Die Montageschiene sowie der Einbaurahmen und/oder die Halteklammer weisen vorzugsweise Schraublöcher auf, insbesondere Schraublöcher mit Gewinde und/oder ohne Gewinde. Damit wird die Montageschiene sicher verschraubt. Im Gegensatz zu herkömmlichen Lösungen sind solche Schraublöcher nur an der Befestigungsvorrichtung und nicht am Sensor selbst vorgesehen, dessen Gehäusedesign weiterhin rein ästhetischen und funktionellen Gesichtspunkten und nicht einer bestimmten Befestigungsweise unterliegt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Beim Montieren wird erfindungsgemäß zunächst die entspannte Halteklammer in obere Führungsschlitze des Einbaurahmens eingesetzt und darin nach unten geschoben. Sie wird insbesondere weiter nach unten geschoben als im endgültigen Montagezustand, um ausreichend Raum für das Vorspannen zu lassen, etwa mit einem unteren Bügel um den unteren Teil des Einbaurahmens herum, und um von unten her einen weiteren Haltepunkt der Halteklammer an dem Einbaurahmen zu ermöglichen.

Die Halteklammer wird dann erfindungsgemäß durch Drücken auf ihren unteren Bereich gegen die Wandung gespannt und in gespanntem Zustand nach oben in untere Führungsschlitze des Einbaurahmens geschoben. Dabei wird das Andrücken durch die Hebelwirkung unterstützt. Der Einbaurahmen sitzt bündig in der Öffnung und kann daher nicht versehentlich mit der Halteklammer verschoben werden. Der Eingriff in die unteren Führungsschlitze erfolgt vorzugsweise mit einem Teilbereich eines unteren Bügels der Halteklammer. Durch die Aufwärtsbewegung wird die Halteklammer auch in den oberen Führungsschlitzen verschoben. Wenn zum Abschluss der Aufwärtsbewegung die Halteklammer in den Enden der unteren Führungsschlitzen anschlägt, hat jedoch die Halteklammer die oberen Führungsschlitze nicht verlassen. Vielmehr wird sie nun durch die Federkraft verlässlich in den unteren und oberen Führungsschlitzen gehalten und drückt zugleich den Einbaurahmen fest gegen die Wandung.

Der Sensor wird daraufhin bevorzugt in den Einbaurahmen eingesetzt und eine Montageschiene auf den Sensor gelegt, die an dem Einbaurahmen und/oder der Halteklammer fixiert wird. Die entsprechenden Befestigungsmittel, wie Schraublöcher, aber auch eine Clips-Befestigung oder jegliche andere bekannte Befestigungsart, können zumindest teilweise an Montageschiene, Halteklammer und/oder Einbaurahmen bereitgestellt sein.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Vorderansicht auf einen beispielhaften Sensor und eine Öffnung, in welcher der Sensor montiert werden soll;
- Fig. 2: eine dreidimensionale Ansicht eines Einbaurahmens;
- Fig. 3: eine dreidimensionale Ansicht einer Halteklammer;
- Fig. 4: eine dreidimensionale Ansicht zur Illustration des Einschiebens des Einbaurahmens in die Öffnung;
- Fig. 5: eine dreidimensionale Ansicht des bündig in die Öffnung eingeschobenen Einbaurahmens;
- Fig. 6a-d: dreidimensionale Ansichten der Schritte, mit denen der Einbaurahmen mit Hilfe der Halteklammer in der Öffnung fixiert wird;
- Fig. 7: eine dreidimensionale Ansicht einer Montageschiene zum Halten des Sensors in dem Einbaurahmen; und
- Fig. 8: eine dreidimensionale Ansicht des fertig in der Öffnung montierten Sensors.

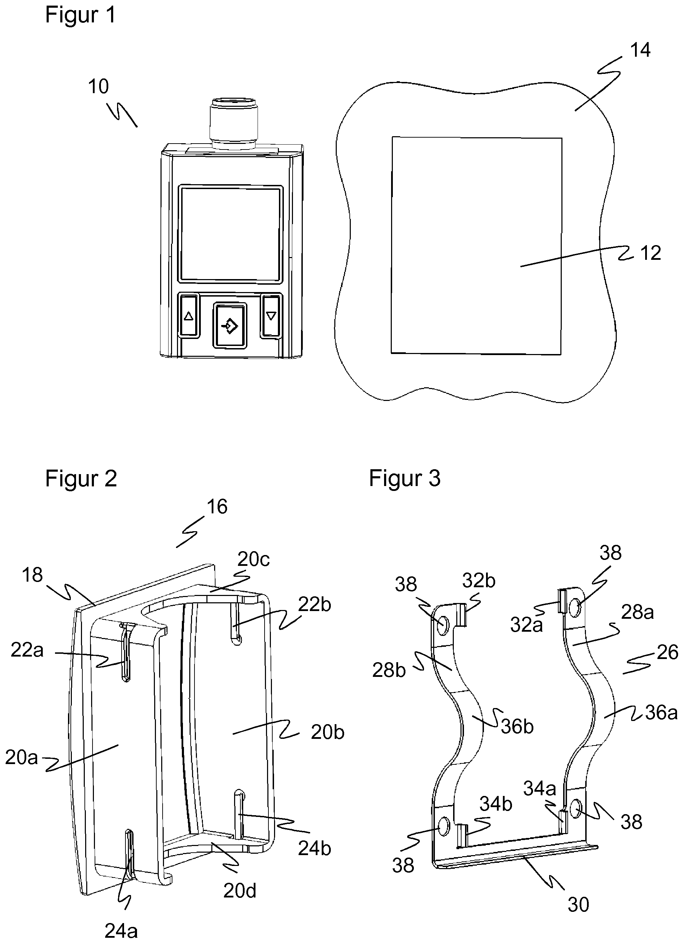

Figur 1 zeigt eine Vorderansicht eines Sensors 10 und einer Aussparung oder Öffnung 12 in einer Wandung 14, in welcher der Sensor 10 montiert werden soll. Die Öffnung 12 ist beispielsweise eine Öffnung in einem Blech oder einer Schalttafel. Die erfindungsgemäße Befestigung wird am Beispiel des Sensors 10 beschrieben, aber sie eignet sich genauso für andere Geräte wie Anzeigen, Bildschirme und anderes, da es für die Befestigung nicht auf die konkrete Funktion ankommt. Der Sensor 10 weist ein in etwa quaderförmiges Gehäuse auf, wobei wie auch beispielhaft gezeigt Abweichungen durch Rundungen, Bedienelemente, Anschlüsse und dergleichen zugelassen sind. Prinzipiell sind auch andere Formen sowohl des Sensors 10 als auch der Öffnung 12 denkbar, etwa ein zylindrischer Sensor 10 und/oder eine runde Öffnung 12, wobei dann die konkrete Gestaltung der Befestigungselemente entsprechend angepasst wird.

Figur 2 zeigt einen Einbaurahmen 16 in einer dreidimensionalen Ansicht von schräg hinten. Der Einbaurahmen 16 hat an seiner hier hinten dargestellten Vorderseite einen umlaufenden Anschlag oder Überstand 18. Auf der in Figur 2 vorne gezeigten Rückseite weist der Einbaurahmen 16 zwei Seitenwände 20a-b sowie zusätzliche Seitenwände 20c-d oben und unten auf. In den Seitenwänden 20a-b sind jeweils obere Führungsschlitze 22a-b und untere Führungsschlitze 24a-b vorgesehen. Aussparungen in den oberen und unteren Seitenwänden 20c-d ermöglichen den Zugang zu Anschluss- oder zusätzlichen Bedienbereichen des Sensors 10.

Figur 3 ist eine dreidimensionale Ansicht einer Halteklammer 26 zum Befestigen des Einbaurahmens 16 in der Öffnung 12. Es kommt erfindungsgemäß genau eine Halteklammer 26 zum Einsatz, die im montierten Zustand bereits allein den Einbaurahmen festhält. Die Halteklammer 26 ist in dieser beispielhaften Ausführungsform bügelförmig mit zwei seitlichen Armen 28a-b und einem unteren Bügel 30. An den seitlichen Armen 28a-b befinden sich jeweils obere Vorsprünge 32a-b und untere Vorsprünge 34a-b für den Eingriff in die Führungsschlitze 22a-b, 24a-b des Einbaurahmens 16. Die Vorsprünge 32a-b, 34a-b sind vorzugsweise für besseren Halt in den Führungsschlitzen 22a-b, 24a-b nochmals abgekantet. Auch der Bügel 30 ist vorzugsweise zusätzlich nach vorne abgekantet, damit er gegen eine Rundung angedrückt werden kann. Weiterhin sind an den seitlichen Armen 28a-b noch Ausbuchtungen 36a-b vorgesehen, um die Federkraft der Halteklammer 26 zu erzeugen und um damit im montierten Zustand gegen die Wandung 14 zu drücken. Schließlich sind in der Halteklammer 26 noch Schraublöcher 38 beziehungsweise Gewinde vorgesehen. Diese können beispielsweise auch in Form von Einpress- oder Nietmuttern realisiert werden.

Die Montage des Sensors 10 erfolgt in drei Schritten. Zuerst wird der Einbaurahmen 16 in die Öffnung 14 eingesetzt. Dort wird der Einbaurahmen 16 mit Hilfe der Halteklammer 26 fixiert. Schließlich wird der Sensor 10 in den Einbaurahmen 16 geklemmt.

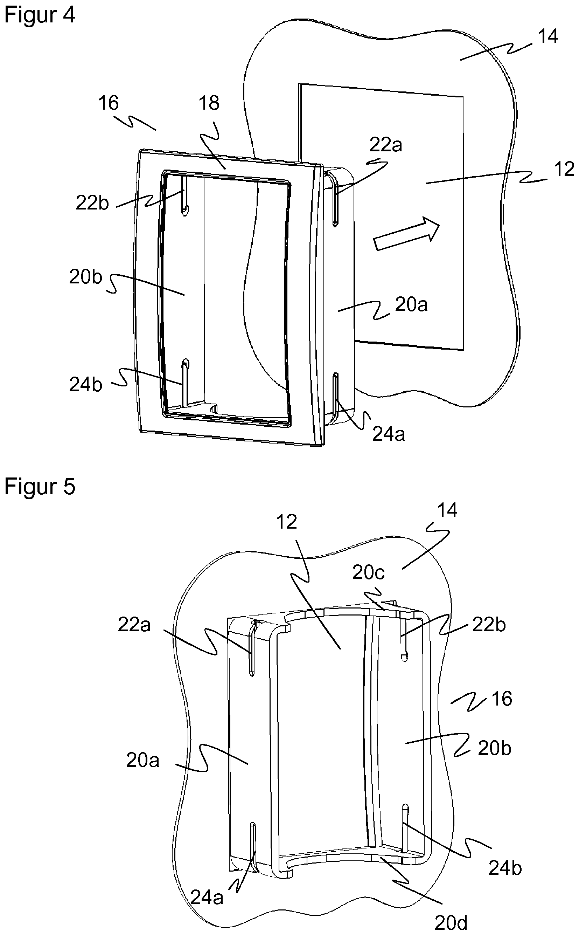

Figur 4 illustriert in einer dreidimensionalen Ansicht von vorne das Einsetzen des Einbaurahmens 16 in die Öffnung 12. Figur 5 zeigt in einer dreidimensionalen Ansicht von hinten, wie der Einbaurahmen 16 anschließend bis zum bündigen Anschlag mit dem Überstand 18 an der Wandung 14 in die Öffnung 12 eingesetzt ist.

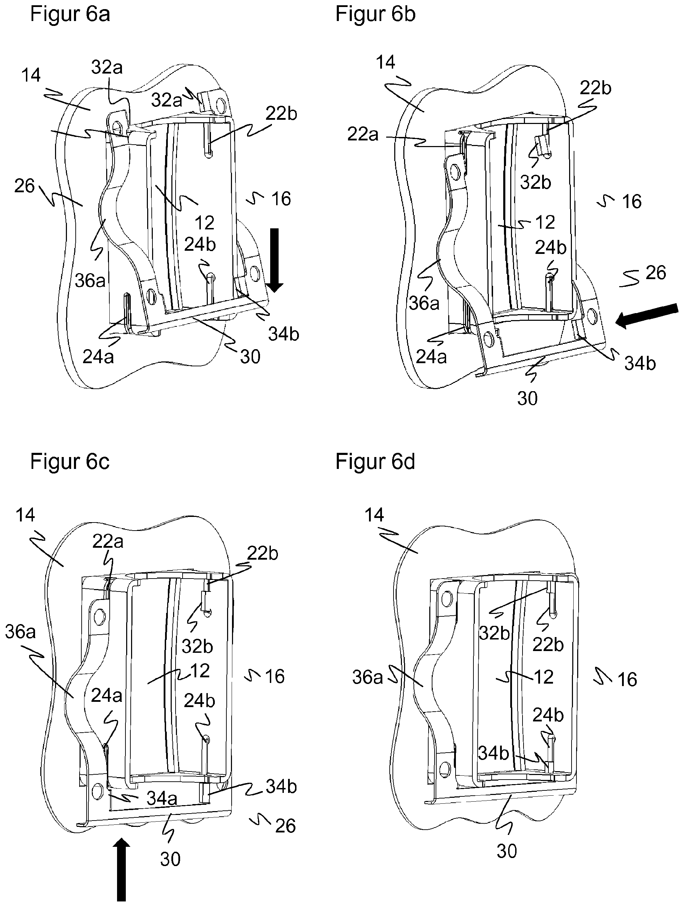

Die Figuren 6a-d illustrieren in dreidimensionalen Ansichten, wie der Einbaurahmen 16 durch vier einfache Handgriffe in dieser Position mit Hilfe der Halteklammer 26 fixiert wird.

Als erstes wird dazu die Halteklammer 26 wie in Figur 6a gezeigt im entspannten Zustand um den Einbaurahmen 16 gelegt, so dass die oberen Vorsprünge 32a-b der Halteklammer 26 am Eintrittsbereich der oberen Führungsschlitze 22a-b des Einbaurahmens 16 liegen. Vorteilhafterweise sind die Ausbuchtungen 36a-b der Halteklammer 26 gerade so dimensioniert, dass sie bei Anliegen an der Wandung 14 für den richtigen Abstand sorgen.

Als zweites wird, wie durch einen Pfeil in Figur 6a angedeutet, die Halteklammer 26 in den Führungsschlitzen 22a-b nach unten geschoben, vorzugsweise bis die Vorsprünge 32a-b an den Enden der Führungsschlitze 22a-b anschlagen. Die anschließende Situation zeigt Figur 6b.

Als drittes wird nun der Bügel 30 gegen die Wandung 14 gedrückt. Dies deutet der Pfeil in Figur 6b an, und Figur 6c zeigt die angedrückte Halteklammer 26. Die erforderliche Kraft ist wegen der Hebelwirkung gering, und der Bügel 30 bietet ausreichend Angriffsfläche.

Als viertes wird die Halteklammer 26 im nun gespannten Zustand vorzugsweise am Bügel 30 nach oben geschoben, wie der Pfeil in Figur 6c andeutet. Dabei werden die unteren Vorsprünge 34a-b der Haltekammer 26 in die unteren Führungsschlitze 24a-b des Einbaurahmens 16 eingeführt. Die Bewegung nach oben wird dadurch begrenzt, dass der Bügel 30 an dem Einbaurahmen 16 anschlägt. Alternativ sind an den seitlichen Armen 28a-b der Halteklammer 26 eigene Anschläge vorgesehen, die gegenüber dem Bügel 30 nach oben versetzt sind. Die oberen Führungsschlitze 22a-b und die unteren Führungsschlitze 24a-b sind bei dem dargestellten Einbaurahmen gleich lang, damit der Einbaurahmen symmetrisch bleibt und ohne Beachtung einer Vorzugsrichtung auch um 180° gedreht verwendet kann. Alternativ wäre es auch denkbar, kürzere untere Führungsschlitze 24a-b zu verwenden und deren Ende als Anschlag für die unteren Vorsprünge 34a-b zu nutzen. Durch die Aufwärtsbewegung der Halteklammer 26 verschieben sich auch die oberen Vorsprünge 32a-b wieder ein Stück in ihren Führungsschlitzen 22a-b nach oben, ohne sie jedoch zu verlassen.

Figur 6d zeigt das Ergebnis. Der Einbaurahmen 16 samt Halteklammer 26 ist nun unabhängig von dem Sensor 10 fest mit der Wandung 14 verbunden. Dabei drücken die Ausbuchtungen 36a-b durch die Federkraft der Halteklammer 26 gegen die Wandung 14 und sichern gleichzeitig durch die Querkraft, dass die Halteklammer 26 nicht wieder nach unten herausrutscht.

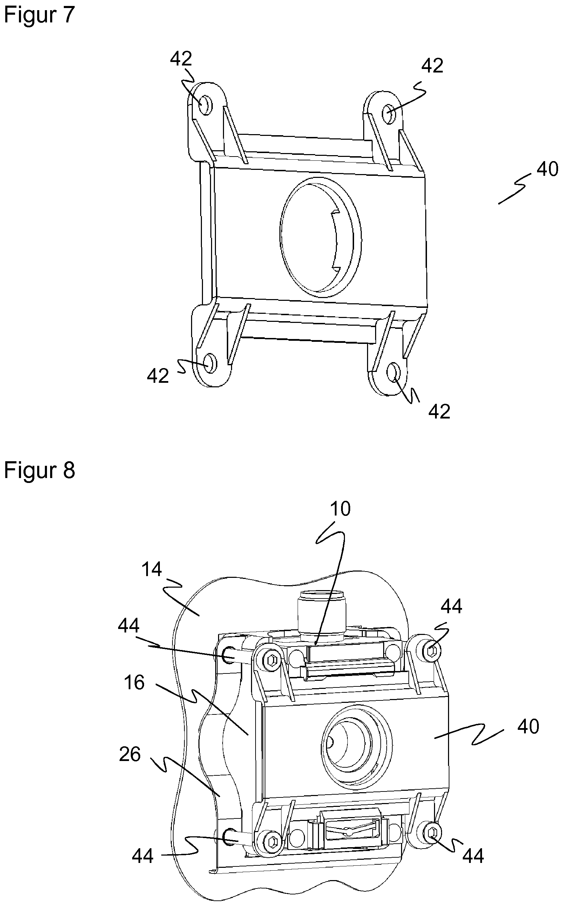

Zum Abschluss der Montage wird der Sensor 10 in dem Einbaurahmen 16 befestigt. Figur 7 zeigt eine dreidimensionale Ansicht einer Montageschiene 40 mit Schraublöchern 42. Die übrige Gestaltung der Montageschiene ist rein beispielhaft für den speziellen Sensor 10 und für die Funktion nicht relevant. Die Montageschiene 40 sollte lediglich eine dem Sensor 10 angemessene Größe und eine passende Auflagefläche besitzen.

Der Sensor 10 wird nun in den Einbaurahmen 16 gesetzt und die Montageschiene 40 darüber gelegt. Zum Abschluss wird die Montageschiene 40 mit Schrauben 44 durch die Schraublöcher 42 der Montageschiene sowie die Schraublöcher 38 der Halteklammer 26 befestigt. Damit wird der Sensor 10 in den Einbaurahmen 16 gedrückt, und die Halteklammer 26 wird zusätzlich gegen ein Herausrutschen gesichert.

Der fertig in der Öffnung 12 der Wandung 14 montierte Sensor 10 ist in Figur 8 in einer dreidimensionalen Ansicht gezeigt.

## Patentansprüche

1. Befestigungsvorrichtung (16, 26, 40) für die Montage eines Sensors (10) in einer Öffnung (12) einer Wandung (14), die einen Einbaurahmen (16) zum Einstecken in die Öffnung (12), ein erstes Befestigungselement zum Halten des eingesteckten Einbaurahmens (16) in der Öffnung (12), das an dem Einbaurahmen (16) anbringbar ist, sowie ein zweites Befestigungselement (40) aufweist, um den Sensor (10) an oder in dem Einbaurahmen (16) zu halten,
**dadurch gekennzeichnet,**
**dass** das erste Befestigungselement als flexible Halteklammer (26) ausgebildet ist, die durch Vorspannung eine Federkraft erzeugt, und dass genau eine Halteklammer (26) vorgesehen ist, die anfangs in entspanntem Zustand um den Einbaurahmen (16) gelegt und die in fertig montiertem Zustand in oberen und unteren Führungsschlitzen (22a-b, 24a-b) des Einbaurahmens (16) gespannt ist, so dass die Halterklammer (26) den Einbaurahmen (16) mit der Federkraft gegen die Wandung (14) drückt.

2. Befestigungsvorrichtung (16, 26, 40) nach Anspruch 1,
wobei der Einbaurahmen (16) rechteckig ist.

3. Befestigungsvorrichtung (16, 26, 40) nach Anspruch 1 oder 2,
wobei der Einbaurahmen (16) einen Überstand (18) aufweist, der beim Einstecken in die Öffnung (12) einen Anschlag an der Wandung (14) bildet.

4. Befestigungsvorrichtung (16, 26, 40) nach einem der vorhergehenden Ansprüche,
wobei der Einbaurahmen (16) Seitenwände (20a-b) aufweist, die im Einbauzustand durch die Öffnung (12) hindurchragen und an denen die Halteklammer (26) den Einbaurahmen (16) hält.

5. Befestigungsvorrichtung (16, 26, 40) nach einem der vorhergehenden Ansprüche,
wobei die Halteklammer (26) bügelförmig mit seitlichen Armen (28a-b) und einer unteren Querverbindung (30) ausgebildet ist.

6. Befestigungsvorrichtung (16, 26, 40) nach Anspruch 5,
wobei die seitlichen Arme (28a-b) eine Ausbuchtung (36a-b) aufweisen.

7. Befestigungsvorrichtung (16, 26, 40) nach einem der vorhergehenden Ansprüche,
wobei das zweite Befestigungselement als mindestens eine Montageschiene (40) ausgebildet ist.

8. Befestigungsvorrichtung (16, 26, 40) nach Anspruch 7,
wobei die Montageschiene (40) sowie der Einbaurahmen (16) und/oder die Halteklammer (26) Schraublöcher (38, 42) aufweisen.

9. Verfahren zum Montieren eines Sensors (10) in einer Öffnung (12) einer Wandung (14),
wobei ein Einbaurahmen (16) in eine Öffnung (12) eingesteckt, der eingesteckte Einbaurahmen (16) mit einem ersten, an dem Einbaurahmen (16) angebrachten Befestigungselement (26) in der Öffnung (12) und der Sensor (10) mit einem zweiten Befestigungselement (40) an oder in dem Einbaurahmen (16) gehalten wird,
**dadurch gekennzeichnet,**
**dass** das erste Befestigungselement als genau eine flexible Halteklammer (26) ausgebildet ist, die durch Vorspannung eine Federkraft erzeugt, dass zunächst die entspannte Halteklammer (26) um den Einbaurahmen (16) gelegt, in obere Führungsschlitze (22a-b) des Einbaurahmens (16) eingesetzt und darin nach unten geschoben wird und dass dann die Halteklammer (26) durch Drücken auf ihren unteren Bereich (28a-b, 30) gegen die Wandung (14) gespannt und in gespanntem Zustand nach oben in untere Führungsschlitze (24a-b) des Einbaurahmens (16) geschoben wird, so dass die Halteklammer (26) den Einbaurahmen (16) mit der Federkraft gegen die Wandung (14) spannt.

10. Verfahren nach Anspruch 9,
wobei der Sensor (10) in den Einbaurahmen (16) eingesetzt und eine Montageschiene (40) als zweites Befestigungselement auf den Sensor (10) gelegt wird, die an dem Einbaurahmen (16) und/oder der Halteklammer (26) fixiert wird.

## Claims

1. A fastening device (16, 26, 40) for mounting a sensor (10) in an opening (12) of a wall (14), which has a mounting frame (16) for insertion into the opening (12), a first fastening element for holding the inserted mounting frame (16) in the opening (12), which can be attached to the mounting frame (16), and a second fastening element (40) for holding the sensor (10) on or in the mounting frame (16),
**characterized in that** the first fastening element is configured as a flexible retaining clip (26) which generates a spring force by tension, and **in that** exactly one retaining clip (26) is provided which is initially placed in a relaxed state around the mounting frame (16) and, in the assembled state, is clamped in upper and lower guide slots (22a-b, 24a-b) of the mounting frame (16), so that the retaining clip (26) presses the mounting frame (16) against the wall (14) with the spring force.

2. The fastening device (16, 26, 40) according to claim 1,
wherein the mounting frame (16) is rectangular.

3. The fastening device (16, 26, 40) according to claim 1 or 2,
wherein the mounting frame (16) has a projection (18) which, when inserted into the opening (12), forms a stop on the wall (14).

4. The fastening device (16, 26, 40) according to one of the preceding claims, wherein the mounting frame (16) has side walls (20a-b) which, in the installed state, project through the opening (12) and on which the retaining clip (26) holds the mounting frame (16).

5. The fastening device (16, 26, 40) according to one of the preceding claims, wherein the retaining clip (26) is bracket-shaped with lateral arms (28a-b) and a lower transverse connection (30).

6. The fastening device (16, 26, 40) according to claim 5,
wherein the lateral arms (28a-b) have a bulge (36a-b).

7. The fastening device (16, 26, 40) according to one of the preceding claims, wherein the second fastening element is configured as at least one mounting rail (40).

8. The fastening device (16, 26, 40) according to claim 7,
wherein the mounting rail (40) and the mounting frame (16) and/or the retaining clip (26) have screw holes (38, 42).

9. A method for mounting a sensor (10) in an opening (12) in a wall (14), wherein a mounting frame (16) is inserted into an opening (12), the inserted mounting frame (16) is held in the opening (12) with a first fastening element attached to the mounting frame (16) and the sensor (10) is held on or in the mounting frame (16) with a second fastening element (40),
**characterized in that** the first fastening element is configured as exactly one flexible retaining clip (26) which generates a spring force by tension, **in that** the relaxed retaining clip (26) is first placed around the mounting frame (16), is inserted into upper guide slots (22a-b) of the mounting frame (16) and pushed downward therein, and **in that** the retaining clip (26) then is clamped against the wall (14) by pressing on its lower region (28a-b, 30) and in the clamped state is pushed upwards into lower guide slots (24a-b) of the mounting frame (16), so that the retaining clip (26) clamps the mounting frame (16) with the spring force against the wall (14).

10. The method according to claim 9,
wherein the sensor (10) is inserted into the mounting frame (16) and a mounting rail (40) is placed on the sensor (10) as a second fastening element which is fixed to the mounting frame (16) and/or the retaining clip (26).

## Revendications

1. Dispositif de fixation (16, 26, 40) pour le montage d'un capteur (10) dans une ouverture (12) d'une paroi (14), qui comprend un cadre de montage (16) pour l'enfichage dans l'ouverture (12), un premier élément de fixation destiné à maintenir le cadre de montage enfiché (16) dans l'ouverture (12) et susceptible d'être monté sur le cadre de montage (16), ainsi qu'un second élément de fixation (40) destiné à maintenir le capteur (10) sur ou dans le cadre de montage (16),
**caractérisé en ce que**
le premier élément de fixation est réalisé sous forme de pince de maintien flexible (26) qui génère une force élastique par une précontrainte, et **en ce qu'**il est prévu précisément une pince de maintien (26) qui est posée initialement, dans l'état détendu, autour du cadre de montage (16) et qui, dans l'état monté fini, est tendue dans des fentes de guidage supérieures et inférieures (22a-b, 24a-b) du cadre de montage (16), de sorte que la pince de maintien (26) pousse le cadre de montage (16) par la force élastique contre la paroi (14).

2. Dispositif de fixation (16, 26, 40) selon la revendication 1,
dans lequel le cadre de montage (16) est rectangulaire.

3. Dispositif de fixation (16, 26, 40) selon la revendication 1 ou 2,
dans lequel le cadre de montage (16) comprend un porte-à-faux (18) qui constitue une butée contre la paroi (14) lors de l'enfichage dans l'ouverture (12).

4. Dispositif de fixation (16, 26, 40) selon l'une des revendications précédentes,
dans lequel le cadre de montage (16) comprend des parois latérales (20a-b) qui, dans l'état de montage, traversent l'ouverture (12) et sur lesquelles la pince de maintien (26) maintient le cadre de montage (16).

5. Dispositif de fixation (16, 26, 40) selon l'une des revendications précédentes,
dans lequel la pince de maintien (26) est réalisée en forme d'arceau comportant des bras latéraux (28a-b) et une liaison transversale inférieure (30).

6. Dispositif de fixation (16, 26, 40) selon la revendication 5,
dans lequel les bras latéraux (28a-b) présentent un renflement (36a-b).

7. Dispositif de fixation (16, 26, 40) selon l'une des revendications précédentes,
dans lequel le second élément de fixation est réalisé sous la forme d'au moins un rail de montage (40).

8. Dispositif de fixation (16, 26, 40) selon la revendication 7,
dans lequel le rail de montage (40) ainsi que le cadre de montage (16) et/ou la pince de maintien (26) présentent des trous de vissage (38, 42).

9. Procédé de montage d'un capteur (10) dans une ouverture (12) d'une paroi (14),
dans lequel un cadre de montage (16) est enfiché dans une ouverture (12), le cadre de montage enfiché (16) est maintenu dans l'ouverture (12) à l'aide d'un premier élément de fixation (26) monté sur le cadre de montage (16), et le capteur (10) est maintenu sur ou dans le cadre de montage (16) à l'aide d'un second élément de fixation (40),
**caractérisé en ce que**
le premier élément de fixation est réalisé sous la forme de précisément une pince de maintien flexible (26) qui génère une force élastique par une précontrainte, et **en ce que** tout d'abord la pince de maintien (26) détendue est posée autour du cadre de montage (16), elle est introduite dans des fentes de guidage supérieures (22a-b) du cadre de montage (16) et elle est poussée dans celles-ci vers le bas, et **en ce que** ensuite, la pince de maintien (26) est tendue contre la paroi (14) par appui sur sa zone inférieure (28a-b, 30), et dans l'état tendu elle est poussée vers le haut dans des fentes de guidage inférieures (24a-b) du cadre de montage (16), de telle sorte que la pince de maintien (26) serre le cadre de montage (16) par la force élastique contre la paroi (14).

10. Procédé selon la revendication 9,
dans lequel le capteur (10) est introduit dans le cadre de montage (16) et un rail de montage (40) est posé comme second élément de fixation sur le capteur (10) et est fixé au cadre de montage (16) et/ou à la pince de maintien (26).
